# EUROPÄISCHE PATENTSCHRIFT

(11) **EP 4 072 922 B1**
(45) Veröffentlichungstag und Bekanntmachung des Hinweises auf die Patenterteilung: **17.07.2024**
(21) Anmeldenummer: 20808074.7
(22) Anmeldetag: 16.11.2020
(51) Int. Cl.: B61C 17/06, B61D 3/02, B61D 5/00, B61D 7/00, B61D 15/00, E01B 27/00, E01B 29/00

(54) **VERFAHREN ZUM BETREIBEN EINER SCHIENENGEFÜHRTEN GLEISBAUMASCHINE UND GLEISBAUMASCHINE**
METHOD FOR OPERATING A RAIL-MOUNTED TRACK-LAYING MACHINE AND TRACK-LAYING MACHINE
PROCÉDÉ DE FONCTIONNEMENT D'UNE MACHINE DE POSE DE VOIE MONTÉE SUR RAIL ET MACHINE DE POSE DE VOIE

(30) Priorität: 10.12.2019 AT 3912019
(43) Veröffentlichungstag der Anmeldung: 19.10.2022
(73) Patentinhaber: Plasser & Theurer Export von Bahnbaumaschinen Gesellschaft m.b.H., 1010 Wien (AT)
(72) Erfinder: KRENN, Stefan, 4163 Klaffer am Hochficht (AT); HOFER, Andreas, 4121 Altenfelden (AT)
(74) Vertreter: Haas, Franz
(86) Internationale Anmeldenummer: PCT/EP2020/082216
(87) Internationale Veröffentlichungsnummer: WO 2021/115729

(56) Entgegenhaltungen:
- WO-A1-2018/210533
- WO-A1-2019/068400

## Beschreibung

### Technisches Gebiet

Die Erfindung betrifft ein Verfahren zum Betreiben einer schienengeführten Gleisbaumaschine und eine Gleisbaumaschine.

### Stand der Technik

Bei Oberleitungssystemen ist die Oberleitungsspannung und der abnehmbare Primärstrom begrenzt. Dies gilt insbesondere im Stillstand von Schienenfahrzeugen. Die Gleisbearbeitung mittels Gleisbaumaschinen erfolgt in der Regel im Stillstand oder bei einer niedrigen Arbeitsfahrtgeschwindigkeit, so dass die Gleisbearbeitung als Stillstand eines Schienenfahrzeugs gewertet wird und dementsprechend über das Oberleitungssystem nur eine geringe maximale Leistung abgenommen werden kann. Bei einem 1,5 kV_{DC}-Oberleitungssystem ist der abnehmbare Primärstrom im Stillstand beispielsweise auf 300 A begrenzt. Die Oberleitungsspannung kann zudem im Betrieb auf einen minimalen Wert von 1,0 KV_{DC} sinken, so dass im ungünstigsten Fall lediglich eine maximal abnehmbare Leistung von 300 kW zur Verfügung steht. Dies führt bei der Gleisbearbeitung mittels schienengeführten Gleisbaumaschinen zu Problemen bei der Energieversorgung.

Aus der WO 2019/068 400 A1 ist eine Gleisbaumaschine mit einem Stopfaggregat bekannt. Die Gleisbaumaschine umfasst elektrische Antriebsmotoren für einen Fahrantrieb sowie einen Vibrationsantrieb des Stopfaggregats, die aus einem elektrischen Zwischenkreis mit elektrischer Energie versorgt werden. Der elektrische Zwischenkreis umfasst einen Energiespeicher. Für einen Stopfvorgang wird eine Bremsleistung der elektrischen Antriebsmotoren des Fahrantriebs zur Versorgung des Vibrationsantriebs genutzt. Durch die zeitliche Überschneidung wird die von den elektrischen Antriebsmotoren an den Zwischenkreis abgegebene Energie sofort von dem Vibrationsantrieb verbraucht, ohne den Energiespeicher zu belasten.

Aus der WO 2018/210 533 A1 ist ein Schienenfahrzeug zur Durchführung eines Arbeitseinsatzes auf einer Gleisanlage bekannt. Das Schienenfahrzeug umfasst als Arbeitsgeräte eine Hubarbeitsbühne und einen Kran.

### Darstellung der Erfindung

Der Erfindung liegt die Aufgabe zugrunde, ein Verfahren zum Betreiben einer schienengeführten Gleisbaumaschine zu schaffen, das auf einfache Weise eine zuverlässige Energieversorgung bei der Gleisbearbeitung gewährleistet. Das Verfahren soll insbesondere dann eine zuverlässige Energieversorgung gewährleisten, wenn eine maximal abnehmbare Leistung gering ist.

Diese Aufgabe wird durch ein Verfahren mit den Merkmalen des Anspruchs 1 gelöst. Erfindungsgemäß wurde erkannt, dass Gleisbaumaschinen in Bearbeitungszyklen betrieben werden, wobei in dem jeweiligen Bearbeitungszyklus die mindestens eine Bearbeitungseinheit eine aufgenommene Leistung P_{B} aufweist, die in verschiedenen Zyklusphasen erheblich unterschiedlich ist. Dadurch, dass die Gleisbaumaschine einen Energiespeicher umfasst, kann die maximal abnehmbare Leistung über den jeweiligen Bearbeitungszyklus betrachtet besser genutzt werden, um für eine Zyklusphase mit einem hohen Leistungsbedarf die Leistung P_{B} auf einfache und zuverlässige Weise zur Verfügung zu stellen. Wenn die von der Energiebereitstellungseinheit maximal abnehmbare Leistung P_{MAX} größer als die momentan aufgenommene Leistung P_{B} der mindestens einen Bearbeitungseinheit ist, so wird mit der Differenzleistung der Energiespeicher geladen. Demgegenüber wird der Energiespeicher entladen, wenn die von der Energiebereitstellungseinheit maximal abnehmbare Leistung P_{MAX} kleiner als die momentan aufgenommene Leistung P_{B} der mindestens einen Bearbeitungseinheit ist. Die zur Energieversorgung der mindestens einen Bearbeitungseinheit fehlende Differenzleistung wird somit durch den Energiespeicher ausgeglichen.

Die mindestens eine Bearbeitungseinheit umfasst mindestens einen Antrieb zum Durchführen der Gleisbearbeitung. Ist zur Gleisbearbeitung das Durchführen einer Arbeitsfahrt der Gleisbaumaschine erforderlich, also das Verfahren der Gleisbaumaschine während des Bearbeitens des Gleises, so umfasst die mindestens eine Bearbeitungseinheit einen Antrieb für ein Bearbeitungswerkzeug und einen Antrieb zum Verfahren der Gleisbaumaschine. Die mindestens eine Bearbeitungseinheit umfasst beispielsweise ein Stopfaggregat.

In der ersten Zyklusphase ist die maximal abnehmbare Leistung P_{MAX} größer als die aufgenommene Leistung P_{B}, so dass der Energiespeicher in der ersten Zyklusphase geladen wird. Demgegenüber ist die maximal abnehmbare Leistung P_{MAX} in der zweiten Zyklusphase kleiner als die aufgenommene Leistung P_{B}, so dass der Energiespeicher in der zweiten Zyklusphase entladen wird. Beispielsweise kann ein Stopfbearbeitungszyklus in eine erste Zyklusphase und eine zweite Zyklusphase unterteilt werden. In der ersten Zyklusphase werden die Stopfpickel in das Schotterbett eingetaucht. In der anschließenden zweiten Zyklusphase werden die eingetauchten Stopfpickel zum Verdichten des Schotterbetts aufeinander zu bewegt.

Ein Verfahren nach Anspruch 2 gewährleistet auf einfache Weise eine zuverlässige Energieversorgung bei der Gleisbearbeitung. Umfasst die Gleisbaumaschine mehrere Bearbeitungseinheiten, die zeitgleich in Betrieb sind, so ist die aufgenommene Leistung P_{B} die Summe der aufgenommenen Leistungen aller Bearbeitungseinheiten.

Ein Verfahren nach Anspruch 3 gewährleistet auf einfache Weise eine zuverlässige Energieversorgung bei der Gleisbearbeitung. Wird die maximal abnehmbare Leistung P_{MAX} in der Steuereinheit vordefiniert, so kann auf eine Messung zur Bestimmung der maximal abnehmbaren Leistung verzichtet werden. Es wird insbesondere ein niedrigster anzunehmender Wert für die maximal abnehmbare Leistung P_{MAX} vordefiniert.

Ein Verfahren nach Anspruch 4 gewährleistet auf einfache Weise eine zuverlässige Energieversorgung bei der Gleisbearbeitung. Anhand der Messung der Oberleitungsspannung und eines bekannten maximal zulässigen Stroms kann die tatsächlich zur Verfügung stehende maximal abnehmbare Leistung P_{MAX} berechnet werden. Der Energiespeicher kann somit zeitoptimal geladen werden.

Ein Verfahren nach Anspruch 5 gewährleistet eine zuverlässige Energieversorgung bei der Gleisbearbeitung. Durch die geringe Arbeitsfahrtgeschwindigkeit ist die Arbeitsfahrt als "Stillstand" zu werten, so dass die maximal abnehmbare Leistung P_{MAX} erheblich beschränkt ist. Durch den Energiespeicher kann die geringe maximal abnehmbare Leistung ausgeglichen werden. Der Antrieb zum Verfahren der Gleisbaumaschine ist Teil der mindestens einen Bearbeitungseinheit.

Ein Verfahren nach Anspruch 6 gewährleistet auf einfache Weise eine zuverlässige Energieversorgung bei der Gleisbearbeitung. Dadurch, dass der Mittelwert M_{PB} der aufgenommenen Leistung P_{B} kleiner als der Mittelwert M_{PMAX} der maximal abnehmbaren Leistung P_{MAX} ist, wird eine dauerhafte Unterversorgung des Energiespeichers und eine sukzessive Entladung des Energiespeichers vermieden.

Ein Verfahren nach Anspruch 7 gewährleistet auf einfache Weise eine zuverlässige Energieversorgung bei der Gleisbearbeitung. Vorzugsweise umfasst der Energiespeicher mehrere Akkumulatoren, die in Reihe und/oder parallel geschaltet sind. Der Energiespeicher ermöglicht eine einfache Speicherung und eine schnelle Bereitstellung von elektrischer Energie.

Ein Verfahren nach Anspruch 8 gewährleistet auf einfache Weise eine zuverlässige Energieversorgung bei der Gleisbearbeitung. Die Energiebereitstellungseinheit wird mittels des mindestens einen Stromabnehmers über eine Oberleitungsspannung der Oberleitung gespeist. Die Oberleitungsspannung kann eine Gleichspannung oder eine Wechselspannung sein. Die Energiebereitstellungseinheit umfasst insbesondere einen Gleichrichter, einen Wechselrichter, einen Transformator und/oder einen Gleichspannungswandler.

Ein Verfahren nach Anspruch 9 gewährleistet auf einfache Weise eine zuverlässige Energieversorgung bei der Gleisbearbeitung. Mittels der mindestens einen Brennstoffzelle kann die maximal abnehmbare Leistung P_{MAX} im Falle des Fehlens einer Oberleitung bereitgestellt werden.

Ein Verfahren nach Anspruch 10 gewährleistet auf einfache Weise eine zuverlässige Energieversorgung bei der Gleisbearbeitung. Mittels des Generators, der mit dem Verbrennungsmotor gekoppelt und von diesem drehangetrieben wird, wird im Falle des Fehlens einer Oberleitung die maximal abnehmbare Leistung P_{MAX} bereitgestellt.

Der Erfindung liegt ferner die Aufgabe zugrunde eine Gleisbaumaschine zu schaffen, die auf einfache Weise eine zuverlässige Energieversorgung bei der Gleisbearbeitung gewährleistet. Die Gleisbaumaschine soll insbesondere dann eine zuverlässige Energieversorgung gewährleisten, wenn eine maximal abnehmbare Leistung gering ist.

Diese Aufgabe wird durch eine Gleisbaumaschine mit den Merkmalen des Anspruchs 11 gelöst. Die Vorteile der erfindungsgemäßen Gleisbaumaschine entsprechen den Vorteilen des erfindungsgemäßen Verfahrens. Die Gleisbaumaschine kann insbesondere auch mit den Merkmalen mindestens eines der Ansprüche 1 bis 10 präzisiert werden. Die mindestens eine Bearbeitungseinheit umfasst insbesondere einen Antrieb. Ist zur Gleisbearbeitung das Durchführen einer Arbeitsfahrt der Gleisbaumaschine erforderlich, also das Verfahren der Gleisbaumaschine während des Bearbeitens des Gleises, so umfasst die mindestens eine Bearbeitungseinheit einen Antrieb für ein Bearbeitungswerkzeug und einen Antrieb zum Verfahren der Gleisbaumaschine.

### Kurze Beschreibung der Zeichnungen

Weitere Merkmale, Vorteile und Einzelheiten ergeben sich aus der nachfolgenden Beschreibung mehrerer Ausführungsbeispiele. Es zeigen:
Fig. 1 eine schematische Darstellung einer Gleisbaumaschine gemäß einem ersten Ausführungsbeispiel mit einer Energiebereitstellungseinheit, einem Energiespeicher und einer Bearbeitungseinheit,
Fig. 2 eine schematische Darstellung der elektrischen Schaltung der Gleisbaumaschine in Figur 1,
Fig. 3 einen zeitlichen Verlauf einer maximal abnehmbaren Leistung PMAX und einer aufgenommenen Leistung PB, und Fig. 4 eine schematische Darstellung der elektrischen Schaltung einer Gleisbaumaschine gemäß einem zweiten Ausführungsbeispiel.

### Beschreibung der Ausführungsformen

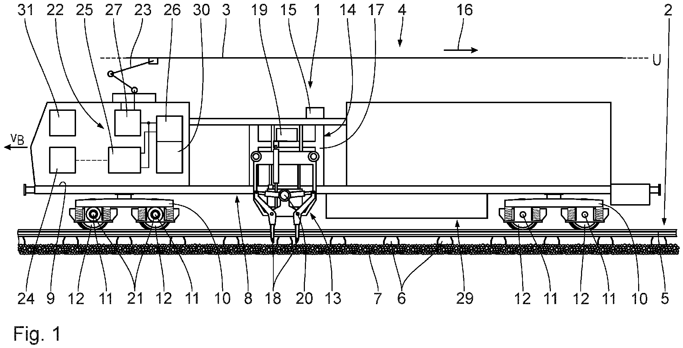

Nachfolgend ist anhand der Figuren 1 bis 3 ein erstes Ausführungsbeispiel der Erfindung beschrieben. Eine Gleisbaumaschine 1 dient zum Bearbeiten eines Gleises 2. Das Gleis 2 und eine Oberleitung 3 bilden eine Gleisanlage 4. Das Gleis 2 umfasst zwei Schienen 5, die mittels Schwellen 6 auf einem Schotterbett 7 angeordnet sind.

Die Gleisbaumaschine 1 umfasst ein Fahrgestell 8 mit einem Maschinenrahmen 9 und daran angeordneten Drehgestellen 10. Die Drehgestelle 10 umfassen drehbar gelagerte Achsen 11 mit daran befestigten Laufrädern 12.

Zur Gleisbearbeitung umfasst die Gleisbaumaschine 1 eine Bearbeitungseinheit 13. Die Bearbeitungseinheit 13 umfasst ein Stopfaggregat 14, das mittels eines Antriebs 15 in einer Schienenlängsrichtung 16 an dem Maschinenrahmen 9 verlagerbar angeordnet ist. Das Stopfaggregat 14 umfasst einen Stopfaggregatrahmen 17, an dem Stopfpickel 18 angeordnet sind. Die Stopfpickel 18 sind hydraulisch in das Schotterbett 7 hinein- und heraus bewegbar sowie zueinander zustellbar. Hierzu weist das Stopfaggregat 14 einen Antrieb 19 zum Betreiben der Hydraulik auf. Das Stopfaggregat 14 umfasst ferner einen Antrieb 20 zur Erzeugung einer Vibrationsbewegung der Stopfpickel 18.

Die Gleisbaumaschine 1 wird während einer Arbeitsfahrt betrieben. Zu diesem Zweck umfasst die Bearbeitungseinheit 13 Antriebe 21 zum Verlagern der Gleisbaumaschine 1. Die Antriebe 21 sind mit Achsen 11 zur Drehmomentübertragung verbunden. Die Antriebe 21 werden auch für Überstellfahrten der Gleisbaumaschine 1 eingesetzt.

Zur Energieversorgung umfasst die Gleisbaumaschine 1 eine Energiebereitstellungseinheit 22. Die Energiebereitstellungseinheit 22 umfasst einen Stromabnehmer 23 zum Kontaktieren der Oberleitung 3. Die Oberleitung 3 stellt eine Oberleitungsspannung U bereit. Die Oberleitungsspannung U ist im vorliegenden Ausführungsbeispiel eine Gleichspannung U = 1,5 kV_{DC}.

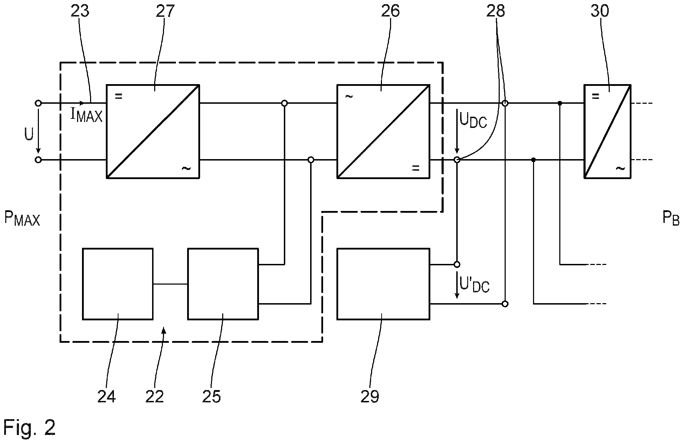

Die Energiebereitstellungseinheit 22 umfasst ferner einen Verbrennungsmotor 24, der zum Antreiben eines Generators 25 mechanisch mit diesem gekoppelt ist. Der Generator 25 ist elektrisch an einen Gleichrichter 26 angeschlossen. Der Stromabnehmer 23 ist über einen Wechselrichter 27 ebenfalls elektrisch an den Gleichrichter 26 angeschlossen. Der Gleichrichter 26 stellt an Ausgangsanschlüssen 28 eine Gleichspannung U_{DC} bereit. In Figur 2 ist die elektrische Schaltung der Energiebereitstellungseinheit 22 veranschaulicht.

Die Gleisbaumaschine 1 umfasst ferner einen Energiespeicher 29, der parallel zu dem Gleichrichter 26 an die Ausgangsanschlüsse 28 angeschlossen ist. Der Energiespeicher 29 stellt eine Gleichspannung U'_{DC} bereit. Der Energiespeicher 29 umfasst mehrere Akkumulatoren, die parallel und/oder ein Reihe geschaltet sind.

Die Antriebe 15, 19, 20 und 21 sind bei Betrieb mit einer Gleichspannung direkt mit den Ausgangsanschlüssen 28 verbunden oder bei Betrieb mit einer Wechselspannung an einen jeweiligen Wechselrichter 30 angeschlossen, der elektrisch mit den Ausgangsanschlüssen 28 verbunden ist.

Die Gleisbaumaschine 1 umfasst ferner eine Steuereinheit 31, die zur Steuerung der Energiebereitstellungseinheit 22 und der Bearbeitungseinheit 13 dient. Die Steuereinheit 31 ist derart ausgebildet, dass der Energiespeicher 29 geladen wird, wenn eine von der Energiebereitstellungseinheit 22 maximal abnehmbare Leistung P_{MAX} größer als eine aufgenommene Leistung P_{B} der Bearbeitungseinheit 13 ist, und dass der Energiespeicher 29 entladen wird, wenn die von der Energiebereitstellungseinheit 22 maximal abnehmbare Leistung P_{MAX} kleiner als die aufgenommene Leistung P_{B} der Bearbeitungseinheit 13 ist.

Die maximal abnehmbare Leistung P_{MAX} ist in der Steuereinheit 31 vordefiniert und ergibt sich aus einem angenommenen Minimalwert der Oberleitungsspannung U und einem maximal zulässigen Primärstrom I_{MAX}. Wird die Energiebereitstellungseinheit 22 bei Fehlen einer Oberleitung 3 nicht über die Stromabnehmer 23 versorgt, sondern über den Generator 25, so ist für diesen Fall in der Steuereinheit 31 eine entsprechende maximal abnehmbare Leistung P_{MAX} definiert.

Die aufgenommene Leistung P_{B} wird durch die Bearbeitungseinheit 13 und deren Antriebe 15, 19, 20 und 21 bestimmt. Weist die Gleisbaumaschine 1 mehrere Bearbeitungseinheiten 13 auf, so ist die aufgenommene Leistung P_{B} die Summe der aufgenommenen Leistung der Bearbeitungseinheiten 13.

Nachfolgend ist der Betrieb der Gleisbaumaschine 1 beschrieben: Zur Gleisbearbeitung führt die Gleisbaumaschine 1 während einer Arbeitsfahrt Stopfvorgänge durch. Während der Arbeitsfahrt weist die Gleisbaumaschine 1 eine Arbeitsfahrtgeschwindigkeit v_{B} auf, wobei gilt: v_{B} ≤ 10 km/h, insbesondere v_{B} ≤ 6 km/h, und insbesondere v_{B} ≤ 2 km/h. Eine derartige Arbeitsfahrtgeschwindigkeit v_{B} wird als "Stillstand" gewertet, so dass der Primärstrom I_{MAX} und somit die maximal abnehmbare Leistung P_{MAX} erheblich begrenzt ist.

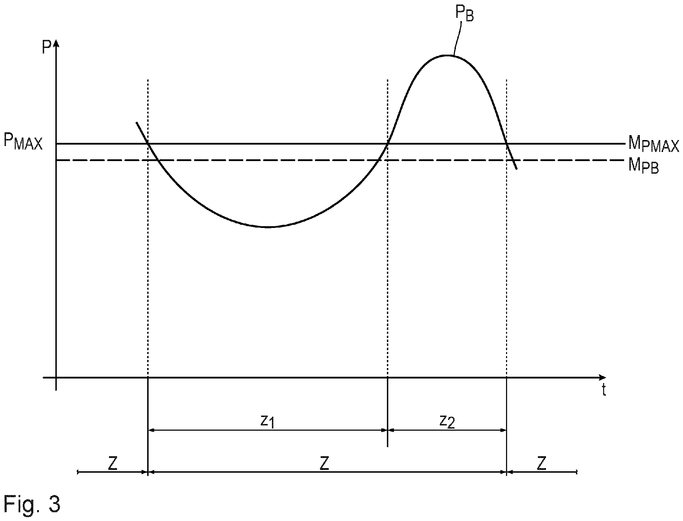

Die Stopfvorgänge stellen sich wiederholende Bearbeitungszyklen Z dar. Die Bearbeitungszyklen Z umfassen jeweils eine erste Zyklusphase z₁ und eine darauffolgende zweite Zyklusphase z₂. Figur 3 veranschaulicht die Leistungen P_{MAX} und P_{B} in Abhängigkeit der Zeit t während eines Bearbeitungszyklus Z. Die maximal abnehmbare Leistung P_{MAX} ist über den Bearbeitungszyklus Z als konstant vordefiniert. Zu Beginn der ersten Zyklusphase z₁ befinden sich die Stopfpickel 18 nach einem Unterstopfen einer Schwelle 6 noch in dem Schotterbett 7. In der ersten Zyklusphase z₁ werden die Stopfpickel 18 aus dem Schotterbett 7 heraus verlagert, das Stopfaggregat 14 in Fahrtrichtung an dem Maschinenrahmen 9 verlagert und die Stopfpickel 18 wieder in das Schotterbett 7 hinein verlagert. In der darauffolgenden zweiten Zyklusphase z₂ erfolgt ein aufeinander Zustellen der Stopfpickel 18 und ein Verdichten des Schotterbetts 7 unterhalb einer Schwelle 6. Die aufgenommene Leistung P_{B} variiert innerhalb eines Bearbeitungszyklus Z. In der ersten Zyklusphase z₁ ist die aufgenommene Leistung P_{B} kleiner als die maximal abnehmbare Leistung P_{MAX}, wohingegen in der zweiten Zyklusphase z₂ die aufgenommene Leistung P_{B} kleiner als die maximal abnehmbare Leistung P_{MAX} ist. Zum Ausgleich der Differenz zwischen den Leistungen P_{MAX} und P_{B} wird der Energiespeicher 29 in der ersten Zyklusphase z₁ geladen, wohingegen der Energiespeicher 29 in der zweiten Zyklusphase z₂ entladen wird. Um eine sukzessives Entladen des Energiespeichers 29 zu verhindern, ist ein Mittelwert M_{PB} der aufgenommenen Leistung P_{B} kleiner als ein Mittelwert M_{PMAX} der maximal abnehmbaren Leistung P_{MAX}.

Durch den Energiespeicher 29 kann die Differenz zwischen der maximal abnehmbaren Leistung P_{MAX} und der aufgenommenen Leistung P_{B} ausgeglichen werden, so dass in Zyklusphasen z₂ mit Leistungsspitzen der aufgenommenen Leistung P_{B} durch den Energiespeicher 29 eine zusätzliche Leistung bereitgestellt wird. Hierdurch kann auf einfache Weise eine zuverlässige Energieversorgung bei der Gleisbearbeitung gewährleistet werden. Der Energiespeicher 29 kann darüber hinaus für einen Notfahrbetrieb und/oder für einen Notbetrieb der Gleisbaumaschine 1 eingesetzt werden.

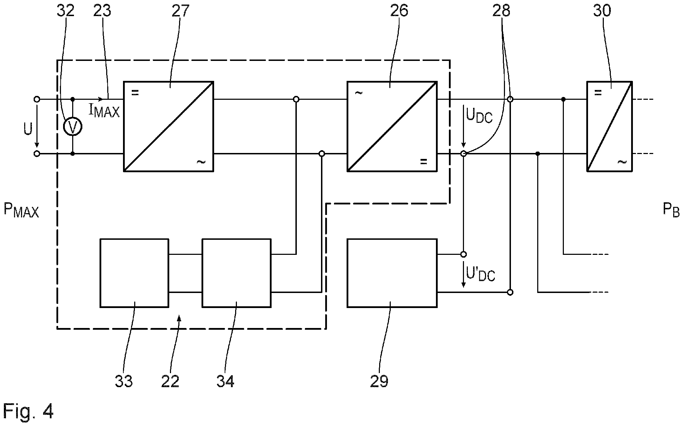

Nachfolgend ist anhand von Figur 4 ein zweites Ausführungsbeispiel beschrieben. Im Unterschied zu dem ersten Ausführungsbeispiel umfasst die Gleisbaumaschine 1 ein Spannungsmessgerät 32 zum Messen der aktuell anliegenden Oberleitungsspannung U. Anhand der gemessenen Oberleitungsspannung U und dem maximal abnehmbaren Primärstrom I_{MAX} wird die maximal abnehmbare Leistung P_{MAX} in der Steuereinheit 31 berechnet.

Darüber hinaus umfasst die Energiebereitstellungseinheit 22 anstelle des Verbrennungsmotors und des Generators eine Brennstoffzelle 33 zur Erzeugung einer Gleichspannung mittels Wasserstoff. Die Brennstoffzelle 33 ist über einen Gleichspannungswandler 34 an die Ausgangsanschlüsse 28 der Energiebereitstellungseinheit 22 angeschlossen. Für die Energieversorgung mittels der Brennstoffzelle 33 ist in der Steuereinheit 31 eine maximal abnehmbare Leistung P_{MAX} vordefiniert. Hinsichtlich des weiteren Aufbaus und der weiteren Funktionsweise wird auf das vorangegangene Ausführungsbeispiel verwiesen.

## Patentansprüche

1. Verfahren zum Betreiben einer schienengeführten Gleisbaumaschine, umfassend die Schritte:
- Bereitstellen einer schienengeführten Gleisbaumaschine (1) auf einem Gleis (2), wobei die Gleisbaumaschine (1) umfasst:
- mindestens eine Bearbeitungseinheit (13), wobei die mindestens eine Bearbeitungseinheit (13) einen Antrieb (15, 19, 20) für ein Bearbeitungswerkzeug und einen Antrieb (21) zum Verfahren der Gleisbaumaschine (1) umfasst,
- eine Energiebereitstellungseinheit (22), und
- einen Energiespeicher (29),
- Bearbeiten des Gleises (2) mittels der mindestens einen Bearbeitungseinheit (13),
- wobei der Energiespeicher (29) geladen wird, wenn eine von der Energiebereitstellungseinheit (22) maximal abnehmbare Leistung P_{MAX} größer als eine aufgenommene Leistung P_{B} der mindestens einen Bearbeitungseinheit (13) ist,
- wobei der Energiespeicher (29) entladen wird, wenn die von der Energiebereitstellungseinheit (22) maximal abnehmbare Leistung P_{MAX} kleiner als die aufgenommene Leistung P_{B} der mindestens einen Bearbeitungseinheit (13) ist, und
- wobei das Bearbeiten mindestens zwei sich wiederholende Bearbeitungszyklen (Z) umfasst, wobei in einer ersten Zyklusphase (z₁) des jeweiligen Bearbeitungszyklus (Z) der Energiespeicher (29) geladen und in einer zweiten Zyklusphase (z₂) des jeweiligen Bearbeitungszyklus (Z) der Energiespeicher (29) entladen wird.

2. Verfahren nach Anspruch 1, **dadurch gekennzeichnet, dass** die Gleisbaumaschine (1) mehrere Bearbeitungseinheiten (13) umfasst und die aufgenommene Leistung P_{B} eine Summe von aufgenommenen Leistungen der Bearbeitungseinheiten (13) ist.

3. Verfahren nach mindestens einem der vorangegangenen Ansprüche, **dadurch gekennzeichnet, dass** die maximal abnehmbare Leistung P_{MAX} in einer Steuereinheit (31) der Gleisbaumaschine (1) vordefiniert wird.

4. Verfahren nach mindestens einem der vorangegangenen Ansprüche, **dadurch gekennzeichnet, dass** die maximal abnehmbare Leistung P_{MAX} in einer Steuereinheit (31) der Gleisbaumaschine (1) anhand einer gemessenen Oberleitungsspannung (U) berechnet wird.

5. Verfahren nach mindestens einem der vorangegangenen Ansprüche, **dadurch gekennzeichnet, dass** das Bearbeiten während einer Arbeitsfahrt erfolgt, wobei für eine Arbeitsfahrtgeschwindigkeit v_{B} insbesondere gilt: v_{B} ≤ 10 km/h, insbesondere v_{B} ≤ 6 km/h, und insbesondere v_{B} ≤ 2 km/h.

6. Verfahren nach mindestens einem der vorangegangenen Ansprüche, **dadurch gekennzeichnet, dass** ein Mittelwert M_{PB} der aufgenommenen Leistung P_{B} kleiner als ein Mittelwert M_{PMAX} der maximal abnehmbaren Leistung P_{MAX} ist.

7. Verfahren nach mindestens einem der vorangegangenen Ansprüche, **dadurch gekennzeichnet, dass** der Energiespeicher (29) mindestens einen Akkumulator umfasst.

8. Verfahren nach mindestens einem der vorangegangenen Ansprüche, **dadurch gekennzeichnet, dass** die Energiebereitstellungseinheit (22) einen Stromabnehmer (23) umfasst, der insbesondere in Kontakt mit einer Oberleitung (3) ist.

9. Verfahren nach mindestens einem der vorangegangenen Ansprüche, **dadurch gekennzeichnet, dass** die Energiebereitstellungseinheit (22) eine Brennstoffzelle (33) umfasst.

10. Verfahren nach mindestens einem der vorangegangenen Ansprüche, **dadurch gekennzeichnet, dass** die Energiebereitstellungseinheit (22) einen Verbrennungsmotor (24) und einen damit gekoppelten Generator (25) umfasst.

11. Gleisbaumaschine mit
- einem Maschinenrahmen (9),
- mindestens zwei Achsen (11) und daran angeordneten schienenführbaren Laufrädern (12),
- mindestens einer Bearbeitungseinheit (13), wobei die mindestens eine Bearbeitungseinheit (13) einen Antrieb (15, 19, 20) für ein Bearbeitungswerkzeug und einen Antrieb (21) zum Verfahren der Gleisbaumaschine (1) umfasst,
- einer Energiebereitstellungseinheit (22), und
- einem Energiespeicher (29),
**gekennzeichnet durch**
- eine Steuereinheit (31), die derart ausgebildet ist, dass
- der Energiespeicher (29) geladen wird, wenn eine von der Energiebereitstellungseinheit (22) maximal abnehmbare Leistung P_{MAX} größer als eine aufgenommene Leistung P_{B} der mindestens einen Bearbeitungseinheit (13) ist,
- der Energiespeicher (29) entladen wird, wenn die von der Energiebereitstellungseinheit (22) maximal abnehmbare Leistung P_{MAX} kleiner als die aufgenommene Leistung P_{B} der mindestens einen Bearbeitungseinheit (13) ist, und
- das Bearbeiten mindestens zwei sich wiederholende Bearbeitungszyklen (Z) umfasst, wobei in einer ersten Zyklusphase (z₁) des jeweiligen Bearbeitungszyklus (Z) der Energiespeicher (29) geladen und in einer zweiten Zyklusphase (z₂) des jeweiligen Bearbeitungszyklus (Z) der Energiespeicher (29) entladen wird.

## Claims

1. A method for operating a rail-guided track maintenance machine involving the following steps:
- Providing a rail-guided track maintenance machine (1) on a track (2), wherein the track maintenance machine (1) comprises:
- at least one working unit (13), wherein the at least one working unit (13) comprises a drive (15, 19, 20) for a working tool and a drive (21) for moving the track maintenance machine (1),
- an energy provision unit (22), and
- an energy storage (29),
- Maintaining the track (2) by means of the at least one working unit (13),
- wherein the energy storage (29) is charged when a maximum available power P_{MAX} from the energy provision unit (22) is greater than an input power P_{B} of the at least one working unit (13),
- wherein the energy storage (29) is discharged when the maximum available power P_{MAX} from the energy provision unit (22) is less than the input power P_{B} of the at least one working unit (13), and
- wherein the maintenance work comprises at least two repeating working cycles (Z), where the energy storage (29) is charged in a first cycle phase (z₁) of the respective working cycle (Z), and the energy storage (29) is discharged in a second cycle phase (z₂) of the respective working cycle (Z).

2. A method according to claim 1, **characterised in that** the track maintenance machine (1) comprises several working units (13) and the input power P_{B} is a sum of input powers of the working units (13).

3. A method according to at least one of the preceding claims, **characterised in that** the maximum available power P_{MAX} is predefined in a control unit (31) of the track maintenance machine (1).

4. A method according to at least one of the preceding claims, **characterised in that** the maximum available power P_{MAX} is calculated in a control unit (31) of the track maintenance machine (1) by way of a measured overhead contact line voltage (U).

5. A method according to at least one of the preceding claims, **characterised in that** the maintenance work takes place during a working run wherein the following applies particularly for a working speed v_{B}: v_{B} ≤ 10 km/h, in particular v_{B} ≤ 6 km/h, and in particular v_{B} ≤ 2 km/h.

6. A method according to at least one of the preceding claims, **characterised in that** a mean value M_{PB} of the input power P_{B} is less than a mean value M_{PMAX} of the maximum available power P_{MAX}.

7. A method according to at least one of the preceding claims, **characterised in that** the energy storage (29) comprises at least one accumulator.

8. A method according to at least one of the preceding claims, **characterised in that** the energy provision unit (22) comprises a pantograph (23) which, in particular, is in contact with an overhead contact line (3).

9. A method according to at least one of the preceding claims, **characterised in that** the energy provision unit (22) comprises a fuel cell (33).

10. A method according to at least one of the preceding claims, **characterised in that** the energy provision unit (22) comprises an internal combustion engine (24) and a generator (25) coupled to it.

11. Track maintenance machine comprising
- a machine frame (9),
- at least two axles (11) and rail-guidable running wheels (12) arranged thereon,
- at least one working unit (13), wherein the at least one working unit (13) comprises a drive (15, 19, 20) for a working tool and a drive (21) for moving the track maintenance machine (1),
- an energy provision unit (22), and
- an energy storage (29)
**characterised by**
- a control unit (31) which is designed in such a way that
- the energy storage (29) is charged when a maximum available power P_{MAX} from the energy provision unit (22) is greater than an input power P_{B} of the at least one working unit (13),
- the energy storage (29) is discharged when the maximum available power P_{MAX} from the energy provision unit (22) is less than the input power P_{B} of the at least one working unit (13), and
- wherein the maintenance work comprises at least two repeating working cycles (Z), where the energy storage (29) is charged in a first cycle phase (z₁) of the respective working cycle (Z), and the energy storage (29) is discharged in a second cycle phase (z₂) of the respective working cycle (Z).

## Revendications

1. Procédé d'exploitation d'une machine de pose de voie guidée sur rails, comprenant les étapes de :
- mise à disposition d'une machine de pose de voie guidée sur rails (1) sur une voie ferrée (2),
dans lequel la machine de pose de voie (1) comprend :
- au moins un module d'usinage (13), dans lequel l'au moins un module d'usinage (13) comprend un entraînement (15, 19, 20) pour un outil d'usinage et un entraînement (21) pour le déplacement de la machine de pose de voie (1),
- un module de mise à disposition d'énergie (22), et
- un accumulateur d'énergie (29),
- usinage de la voie ferrée (2) au moyen de l'au moins un module d'usinage (13),
- dans lequel l'accumulateur d'énergie (29) est chargé lorsqu'une puissance P_{MAX} pouvant être captée au maximum par le module de mise à disposition d'énergie (22) est supérieure à une puissance absorbée P_{B} de l'au moins un module d'usinage (13),
- dans lequel l'accumulateur d'énergie (29) est déchargé lorsque la puissance P_{MAX} pouvant être captée au maximum par le module de mise à disposition d'énergie (22) est inférieure à la puissance absorbée P_{B} de l'au moins un module d'usinage (13), et
- dans lequel l'usinage comprend au moins deux cycles d'usinage se répétant (Z), dans lequel l'accumulateur d'énergie (29) est chargé dans une première phase de cycle (z₁) du cycle d'usinage respectif (Z) et l'accumulateur d'énergie (29) est déchargé dans une seconde phase de cycle (z₂) du cycle d'usinage respectif (Z).

2. Procédé selon la revendication 1, **caractérisé en ce que** la machine de pose de voie (1) comprend plusieurs modules d'usinage (13) et la puissance absorbée P_{B} est une somme de puissances absorbées des modules d'usinage (13).

3. Procédé selon au moins une des revendications précédentes, **caractérisé en ce que** la puissance P_{MAX} pouvant être captée au maximum est prédéfinie dans un module de commande (31) de la machine de pose de voie (1).

4. Procédé selon au moins une des revendications précédentes, **caractérisé en ce que** la puissance P_{MAX} pouvant être captée au maximum est calculée dans un module de commande (31) de la machine de pose de voie (1) à l'aide d'une tension de caténaire mesurée (U).

5. Procédé selon au moins une des revendications précédentes, **caractérisé en ce que** l'usinage s'effectue pendant un trajet de travail, dans lequel pour une vitesse de trajet de travail v_{B}, il est notamment valable : v_{B} ≤ 10 km/h, en particulier v_{B} ≤ 6 km/h, et en particulier v_{B} ≤ 2 km/h.

6. Procédé selon au moins une des revendications précédentes, **caractérisé en ce qu'**une valeur moyenne M_{PB} de la puissance absorbée P_{B} est inférieure à une valeur moyenne M_{PMAX} de la puissance P_{MAX} pouvant être captée au maximum.

7. Procédé selon au moins une des revendications précédentes, **caractérisé en ce que** l'accumulateur d'énergie (29) comprend au moins une batterie.

8. Procédé selon au moins une des revendications précédentes, **caractérisé en ce que** le module de mise à disposition d'énergie (22) comprend un pantographe (23) qui est notamment en contact avec une caténaire (3).

9. Procédé selon au moins une des revendications précédentes, **caractérisé en ce que** le module de mise à disposition d'énergie (22) comprend une pile à combustible (33).

10. Procédé selon au moins une des revendications précédentes, **caractérisé en ce que** le module de mise à disposition d'énergie (22) comprend un moteur à combustion (24) et un générateur couplé à celui-ci (25).

11. Machine de pose de voie avec
- un châssis de machine (9),
- au moins deux essieux (11) et des roues porteuses (12) pouvant être guidées sur rails disposées sur ceux-ci,
- au moins un module d'usinage (13), dans laquelle l'au moins un module d'usinage (13) comprend un entraînement (15, 19, 20) pour un outil d'usinage et un entraînement (21) pour le déplacement de la machine de pose de voie (1),
- un module de mise à disposition d'énergie (22), et
- un accumulateur d'énergie (29),
**caractérisée par**
- un module de commande (31) qui est réalisé de telle sorte que
- l'accumulateur d'énergie (29) est chargé lorsqu'une puissance P_{MAX} pouvant être captée au maximum par le module de mise à disposition d'énergie (22) est supérieure à une puissance absorbée P_{B} de l'au moins un module d'usinage (13),
- l'accumulateur d'énergie (29) est déchargé lorsque la puissance P_{MAX} pouvant être captée au maximum par le module de mise à disposition d'énergie (22) est inférieure à la puissance absorbée P_{B} de l'au moins un module d'usinage (13), et
- l'usinage comprend au moins deux cycles d'usinage se répétant (Z), dans laquelle l'accumulateur d'énergie (29) est chargé dans une première phase de cycle (z₁) du cycle d'usinage respectif (Z) et l'accumulateur d'énergie (29) est déchargé dans une seconde phase de cycle (z₂) du cycle d'usinage respectif (Z).
